(19) Europäisches Patentamt

European Patent Office

Office européen des brevets

(11) **EP 1 499 152 B1**

(12) **EUROPEAN PATENT SPECIFICATION**

(45) Date of publication and mention
of the grant of the patent:
**03.08.2005 Bulletin 2005/31**

(51) Int Cl.⁷: **H04Q 7/38**

(21) Application number: **04254141.7**

(22) Date of filing: **09.07.2004**

(54) **Method and apparatus for adaptive and online assignment in hierarchical overlay networks**

Verfahren und Gerät zur adaptiven und online durchgeführten Zuweisung in hierarchischen überlagerten Netzen

Procédé et dispositif d'attribution adaptive et en ligne dans des réseaux hiérarchiques superposés

(84) Designated Contracting States:
**DE FR GB**
Designated Extension States:
**AL HR LT LV MK**

(30) Priority: **14.07.2003 US 619046**

(43) Date of publication of application:
**19.01.2005 Bulletin 2005/03**

(73) Proprietor: **LUCENT TECHNOLOGIES INC.**
**Murray Hill, New Jersey 07974-0636 (US)**

(72) Inventors:
• **Han, Seung-Jae**
**Basking Ridge New Jersey, 07920 (US)**

• **Klein, Thierry E.**
**Westfield New Jersey, 07090 (US)**

(74) Representative:
**Watts, Christopher Malcolm Kelway, Dr. et al**
**Lucent Technologies NS UK Ltd**
**5 Mornington Road**
**Woodford Green Essex, IG8 0TU (GB)**

(56) References cited:
**EP-A- 1 143 749**          **US-A- 5 805 993**
**US-A1- 2002 102 976**      **US-B1- 6 208 863**

## Description

### Field of the Invention

The present invention relates to wireless communications systems and, more specifically, to user assignment strategies in hierarchical data overlay networks.

### Background of the Invention

Wireless communications systems are becoming an increasingly integral aspect of modern communications. Some of the major challenges facing next-generation wireless networks lay in efficient resource allocation and mobility management strategies that can accommodate a large number of high-data-rate users. Hierarchical or multi-tier network architectures which, for example, have a macro-cell layer and a micro-cell layer, have recently been proposed for these applications.

In such two-tier, hierarchical networks, assignment strategies for assigning different users to different tiers have to date been tailored towards voice users and circuit-switched services, with the objective of reducing the probability of service blocking or call dropping. These assignment strategies, which are well known in the art, have focused on the velocities of mobile users relative to the center of a micro-cell or macro-cell, and micro-cell and macro-cell traversal times relative to handoff and switching times. As an example, the document US 5 805 993 A describes a method for calculating a velocity threshold based on which it is decided whether a mobile user is being assigned to a macro-cell or a micro-cell. Furthermore the load condition of the target cell is determined. Such assignment strategies are appropriate for voice users, who have fixed throughput rates and bounded data-delay requirements, and whose call arrival and call length processes conform to particular statistical models.

However, data users, while in some cases requiring more aggregate bandwidth than voice users, are generally more flexible with respect to delay and minimum continuous data rate requirements, and their usage patterns exhibit different statistical distributions compared to voice users. For example, email communications are much less sensitive to delays and interruptions in transmission than are voice communications. Internet access and file transfers, likewise, can tolerate a bursty communications channel, as long as reasonable response times and reasonable average throughputs are maintained. Further, due to increased buffering typically available on data devices relative to voice devices, and due to the substantially unidirectional nature of the communications, even streaming data applications exhibit a greater robustness to data interruptions than do voice communications.

In order to address the differences between a data transmission and a voice transmission, one recent attempt at user assignment took into account data characteristics of transmissions or, alternatively, data characteristics coupled with velocity characteristics of transmissions. This attempt is described in commonly-assigned copending U.S. Patent US 2004202135A, having the Application Serial No. 10/411844, filed April 11, 2003, titled "User Assignment Stratgegies For Hierarchical And Other Overlay Networks," having the same inventors as the present application (" '844 application"). This application describes an assignment system that made assignment decisions to different layers in a communication network for both voice and data users by taking into account the different characteristics of such users' transmissions.

### Summary of the Invention

The inventors have now recognized that assignment strategies that are appropriate for voice users may be inefficient and/or inadequate for next generation wireless networks that support both voice and data users. Specifically, the present inventors have realized that it is advantageous to use an assignment method for users transmitting data that is not necessarily based on the same assignment criteria used for assigning users transmitting voice messages. While the '844 application is useful in many regards, the calculations required by the assignment strategies developed in accordance with the teachings of that application were relatively intensive and complex.

The present inventors have invented a more efficient, less complex method and apparatus for calculating a transmission characteristic threshold used in an assignment strategy to assign a data transmission from a user to one layer in a plurality of layers in a wireless communications network. Specifically, a balancing metric is calculated for one layer in the network as a function of a characteristic of the user's data transmission. This balancing metric is then calculated for a second layer in the network, also as a function of the characteristic of the user's transmission. A transmission characteristic threshold is then adjusted in response to the value of the first balancing metric relative to the second balancing metric. Data users are assigned to a layer in the network based on a comparison of the adjusted threshold to the value of the characteristic for that user. The method and apparatus of the present invention does not require excessively complex calculations and, as a result, can be made on-line in near-real-time to adjust the assignment strategy adaptively to accommodate the changing needs of users.

**Brief Description of the Drawing**

FIG. 1 shows an exemplary hierarchical network and assignment controller according to one embodiment of the present invention;

FIG. 2 shows an exemplary implementation of a hierarchical assignment manager in the network of FIG. 1; and

FIG. 3 shows a flow diagram illustrating the operation of the hierarchical assignment manager of FIG. 2.

**Detailed Description of the Invention**

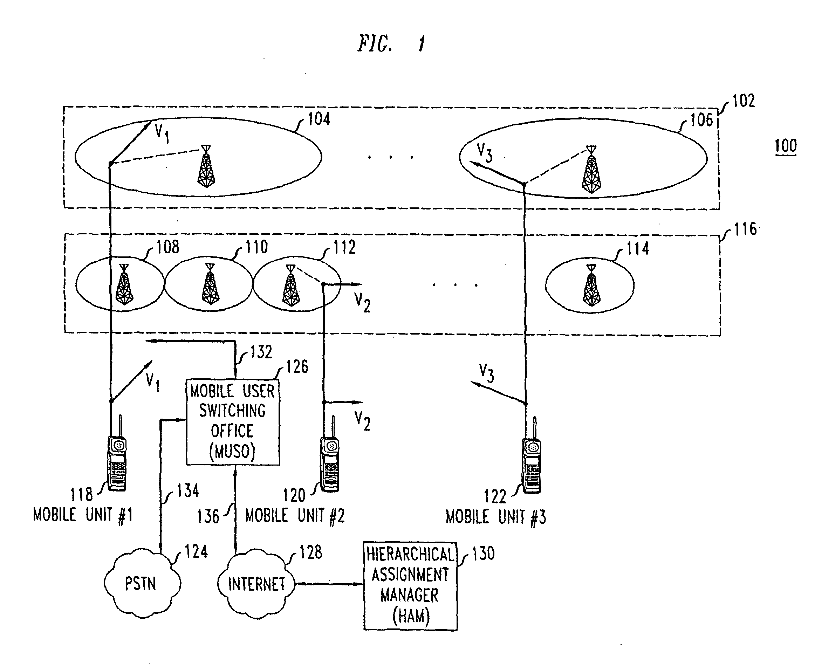

FIG. 1 shows an exemplary hierarchical network with a hierarchical assignment manager (HAM) 130 according to one embodiment of the present invention. For simplicity, a network of only two layers is illustrated; however, one skilled in the art will recognize that such a network may be extended to three or more layers. The two layers depicted are referred to as the macro-cell layer and the micro-cell layer. The macro-cell layer 102 contains one or more macro-cells (e.g., macro-cells 104 and 106) that are typically configured for coverage of a geographical region. The micro-cell layer 116 contains one or more micro-cells (e.g., micro-cells 108, 110, 112, and 114) that are typically used to provide high throughput in local high-usage areas (i.e., areas where high usage is expected or has been experienced, for example, in and around airports, malls, traffic hubs, and convention centers).

FIG. 1 also depicts mobile unit 118, mobile unit 120, and mobile unit 122 that transmit and receive data over the micro-cell layer or the macro-cell layer. At an instant in time, for example, mobile unit 118 has velocity $v_1$, is assigned to macro-cell 104, and has, illustratively, a quantity $D_{r1}$ of data to transmit. Mobile unit 120 has velocity $v_2$, is assigned to micro-cell 112, and has, illustratively, a quantity of data $D_{r2}$ to transmit. Finally, mobile unit 122 has velocity $v_3$, is assigned to macro-cell 106, and has, illlustratively, a quantity of data $D_{r3}$ to transmit.

The macro-cells and micro-cells are centered on cell sites, each of which includes transceiver equipment to support the wireless users (e.g., mobile users 118, 120 and 122) that are assigned to that cell. The macro-cells and micro-cells are linked to mobile user switching office (MUSO) 126 (links not shown), which provides connectivity for voice calls to/from public switched telephone network (PSTN) 124 and connectivity for data calls to/from a private data network via illustrative communication link 132 or the public Internet 128 via illustrative communication link 136. Internet 128 also provides connectivity between illustrative mobile users 118, 122 and 122 and hierarchical assignment manager (HAM) 130. HAM 130 functions to assign a user data transmission to one of the layers in the hierarchical network, here either the micro-cell layer 116 or the macro-cell layer 102. One skilled in the art will recognize that HAM 130 may be part of or co-hosted at MUSO 126, or located or distributed at any other location throughout the network and/or base stations.

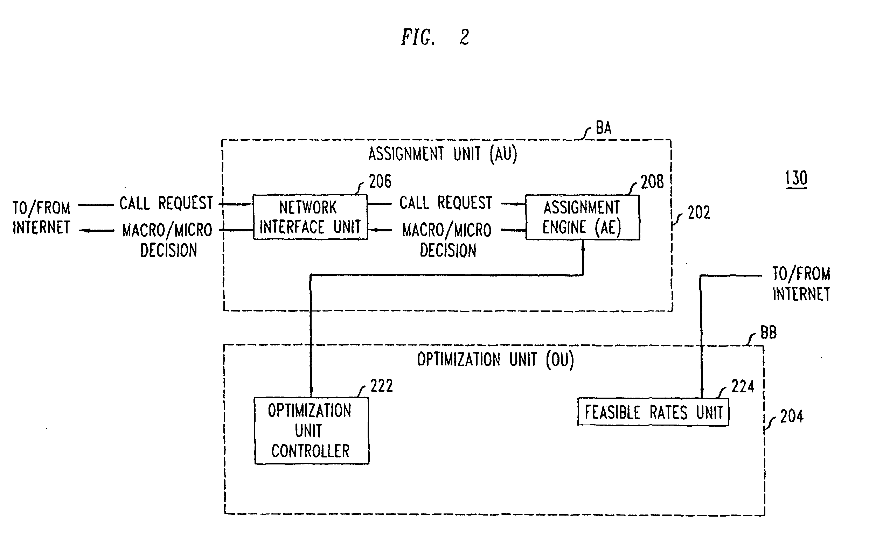

FIG. 2 shows one illustrative implementation of HAM 130 in FIG. 1. Specifically, FIG. 2 depicts two illustrative components of HAM 130, the assignment unit (AU) 202 and optimization unit (OU) 204. The AU 202 handles the dynamic assignment of users to the macro-cell layer or the micro-cell layer in the system based on a calculated transmission characteristic threshold, while the OU 204 processes transmission data and generates metrics used in the determination of the above-referenced threshold that is used by the AU in the dynamic assignment decision. The calculation of the metrics and threshold by the OU, discussed further below, can be accomplished periodically or in near-real-time, such as illustratively every 1 - 5 minutes. Those skilled in the art will realize that different timeframes may be utilized for such calculations.

AU 202 includes network interface unit 206, which interfaces the assignment with the Internet, thereby providing connectivity between the AU and mobile subscribers via the mobile user switching office 126 in FIG. 1. Call requests from mobile users, which include information related to a desired user transmission characteristic, such as velocity and/or the size of data to be transmitted, are received by network interface unit 206 and passed to assignment engine 208 for processing. To make assignment decisions, assignment engine (AE) 208 makes use of a transmission characteristic threshold for the desired user transmission characteristic, such as, for example, a specific velocity threshold, that is calculated by the optimization unit. If the desired characteristic of a transmission by a particular user falls below this threshold (e.g., the user is traveling slower than the threshold velocity) then the transmission from that user will be assigned to one layer of the network (e.g., to a micro-cell). If, on the other hand, the user transmission characteristic is above the threshold (e.g., the user is traveling faster than the threshold velocity), then the transmission from that user will be assigned to a second layer of the network (e.g., to a macro-cell). The assignment result of the AE (e.g., either a macro- or a micro-cell) is communicated to the mobile user via network interface unit 206 and also optionally stored, along with other identifying information, in a user database in mobile user switching office 126 for the purpose of maintaining the layer assignment through a low-level handoff.

As discussed previously, OU 204 calculates certain metrics to generate a transmission characteristic threshold that is used by the AU 202 in assigning a user to a particular layer in the network. In one embodiment in accordance with the principles of the present invention, these calculations are dependent upon the type of assignment system used in the network. For example, in a velocity assignment system (VAS), the OU 204 calculates a velocity threshold to be used to determine when a user is to be assigned to a particular layer in the network. Alternatively, in a data assignment system (DAS), the OU 204 calculates a data criterion threshold (such as, illustratively, a data size threshold) to be used to determine when a user is to be assigned to a particular layer. Ideally, the calculated threshold will be such that, when the threshold is used to make assignment decisions, there is an optimal balance in system usage between the different layers of the network such as, here, the macro-cell layer and the micro-cell layer.

For any assignment system, for example either a VAS or DAS - based system, in order to determine whether an optimal balance exists between the different system layers, a particular goal based on an operating characteristic of the system layers must be established. For example, in any assignment system, the operating characteristic may be the average number of users in the system and, thus, the goal may be to minimize this average number of users. This particular goal will allow users to transmit over the minimum necessary time and then to exit the system, thereby freeing available resources for the remaining users or any new incoming users. Alternatively, another operating characteristic for such systems could be the expected system load seen by a new user to the system and, thus, the goal may be to minimize this expected system load. This goal will give each new user the best assignment to a particular layer that minimizes the total number of bits of information to be transmitted cumulatively for all users (i.e., the number of users multiplied by the number of bits each user has to transmit) when the new user's data requirements are taken into account. The above two operating characteristics used to develop goals for assigning users to a layer in a network are merely illustrative in nature. One skilled in the art will recognize that any relevant operating characteristic used to develop such goals to make assignment strategies will work equally as well.

The balance at any given time between, for example, the macro-cell layer and the micro-cell layer can be measured through the use of a balancing metric to determine whether there is a system balance between the two different layers. This balancing metric is directly related to the particular operating characteristic to be achieved (e.g., the average number of users in the system or the expected system load seen by a new user to the system).

In one illustrative embodiment in accordance with the principles of the present invention, an assignment system is selected wherein the performance goal of the assignment system is to minimize the average number of users in the system. The average number of users in the system can be defined by the expression:

$$E[N_{sys}] = E[N_m] + E[N_\mu] \tag{1}$$

where $E[N_{sys}]$ is the average number of users in the system, $E[N_m]$ is the average number of users in the macro-cell layer, and $[N_\mu]$ is the average number of users in the micro-cell layer. As is apparent from equation 1, in order to minimize the average number of users in the system $E[N_m]$ and $E[N_\mu]$ should be adjusted in a way such that the sum of the terms $E[N_m]$ and $E[N_\mu]$ is minimized.

To accomplish this adjustment, where the goal is to minimize the average number of users, the goal of a balancing metric used to compare the macro- and micro cell layers can be written as:

$$X_m = X_\mu \tag{2A}$$

where:

$$X_m = \frac{C_m - \lambda_m \bar{D}_m}{\sqrt{C_m}} \tag{2B}$$

and

$$X_\mu = \frac{C_\mu - \lambda_\mu \bar{D}_\mu}{\sqrt{C_\mu}} \tag{2C}$$

In equations 2A, 2B and 2C, $C_m$ is the cell capacity of the macro-cell layer (i.e., the total cell throughput at the macro cell), $\lambda_m$ is the call arrival rate after assignment of the user to the macro-cell, $C_\mu$ is the cell capacity of the micro-cell layer (i.e., the total cell throughput at the micro cell), and $\lambda_\mu$ is the call arrival rate after assignment of the user to the micro cell, $X_m$ is the balancing metric for the macro-cell layer, $X_\mu$ is the balancing metric for the micro-cell

layer, $\bar{D}_m$ is the average data size of the users in the macro-cells; $\bar{D}_\mu$ is the average data size of the users in the micro-cells; and the expression

$$\frac{C_x - \lambda_x \bar{D}_x}{\sqrt{C_x}}$$

is the balancing metric for exemplary layer "x" in the network. In a DAS system, $\bar{D}_m$ is defined by the expression

$$\bar{D}_m = \frac{\lambda_1 \int\limits_{D_{min}}^{D_0} df_D(d)dd + \lambda_2 E[D]}{\lambda_m}$$

and $\bar{D}_\mu$ is defined by the expression

$$\bar{D}_\mu = \frac{\lambda_1 \int\limits_{D_0}^{D_{max}} df_D(d)dd}{\lambda_\mu} \ .$$

Similarly, in a VAS system, $\bar{D}_m$ is defined by the expression $\bar{D}_m = E[D]$ and $\bar{D}_\mu$ is defined by the expression $_\mu = E[D]$ where E[D] is the average data size of all users in the user population.

In equations 2A-2C, $C_\mu$ and $C_m$ are independent of the assignment strategy, however $\lambda_m$ and $\lambda_\mu$ are dependent upon the particular assignment strategy used (e.g., VAS or DAS) and can be defined as a function of the aggregate call arrival rates in the system prior to any assignment decision. Such aggregate rates are experienced by the micro-cell layer in the network (denoted herein as rate of calls and the macro-cell layer in the network (denoted herein as rate of calls $\lambda_2$). The use of these aggregate rates is necessary as some of the calls counted in the rate $\lambda_1$ in the micro-cell will not be assigned to the micro-cell layer but will, instead, be assigned to the macro-cell layer. Thus, it can be stated that, dependent in part on the aggregate data rates $\lambda_1$ and $\lambda_2$, assignment decisions are made between the two layers of the network and, accordingly, the post-assignment data rates $\lambda_\mu$ and $\lambda_m$ are achieved in the micro- and macro-cell layers. Thus, $\lambda_\mu$ and $\lambda_m$ in equations 2B and 2C (which represent the rate of calls actually assigned to the micro-cell and the macro-cell layers, respectively) can be more particularly defined as:

$$\lambda_\mu = \lambda_1 q_\mu \qquad\qquad (3)$$

and

$$\lambda_m = \lambda_2 + \lambda_1 q_m \qquad\qquad (4)$$

where $q_\mu$ is the probability that a user meets the criteria for assignment to the micro-cell layer and $q_m$ is the probability that a user meets the criteria for assignment to the macro-cell layer.

As mentioned above, $\lambda_\mu$ and $\lambda_m$ are dependent upon the assignment system used. In particular, this dependency is reflected in the calculations of the probabilities $q_\mu$ and $q_m$, which differ depending upon the assignment strategy. Specifically, in a VAS-based system, $q_m$ and $q_\mu$ can be calculated as:

$$q_m = \int_{v=V_0}^{V_{max}} \int_{d=D_{min}}^{D_{max}} f_{V,D}(v,d)dvdd = \int_{v=V_0}^{V_{max}} f_V(v)dv \qquad\qquad (5)$$

and

$$q_\mu = \int_{v=V_{min}}^{V_0} \int_{d=D_{min}}^{D_{max}} f_{V,D}(v,d)dvdd = \int_{v=V_{min}}^{V_0} f_V(v)dv \qquad (6)$$

where d is the data to be transmitted by a user, $D_{min}$ is the minimum data amount to be transmitted by any user in the user population, $D_{max}$ is the maximum data amount to be transmitted by a user, v is the velocity of a user, $V_{min}$ is the minimum velocity in the user population, $V_{max}$ is the maximum velocity in the user population, and $V_0$ is the velocity threshold above which a user is assigned to a particular layer in the system (i.e., here, illustratively, users with average velocity $V > V_0$ are assigned to the macro layer to minimize hand-offs). In a DAS-based system, on the other hand, $q_\mu$ and $q_m$ can be calculated as:

$$q_m = \int_{d=D_{min}}^{D_0} \int_{v=V_{min}}^{V_{max}} f_{V,D}(v,d)dvdd = \int_{d=D_{min}}^{D_0} f_D(d)dd \qquad (7)$$

and

$$q_\mu = \int_{d=D_0}^{D_{max}} \int_{v=V_{min}}^{V_{max}} f_{V,D}(v,d)dvdd = \int_{d=D_0}^{D_{max}} f_D(d)dd \qquad \cdot (8)$$

where the variables are defined as in the VAS system above and $D_0$ is the data size threshold above which a user is assigned to a particular layer in the system (i.e., here, illustratively, users whose amount of data $D > D_0$ are assigned to the micro layer due to the inherently larger capacity of micro cells relative to macro cells).

Thus, equations 3-8 above provide calculations that are necessary to determine both sides of the balancing metric of equation 2A. If the side of equation 2A representing the macro-cell layer (i.e., $X_m$) is larger than the side representing the micro-cell layer (i.e., $X_\mu$) then, illustratively, the threshold at which a user is assigned to the macro-cell layer will be appropriately modified (e.g., in a VAS-based system, the velocity at which a user will be assigned to the macro-cell layer will be raised, and in a DAS-based system, the data size at which a user will be assigned to the macro-cell layer will be lowered). The converse will occur if $X_\mu$ is higher than $X_m$ (i.e., the result being that the threshold for assigning to the macro-cell layer will be lowered in a VAS system and raised in a DAS system).

It follows that, in accordance with the principles of the present invention, a threshold can be determined at which balance is achieved according to equation 2A (i.e., the threshold at which the two sides of equation 2A are equal). This threshold is referred to herein as the optimal threshold. In a system where the goal is to minimize the average number of users in a DAS-based system, the optimal data size threshold can be determined by:

$$\int_{D_{min}}^{D_0^*} x f_D(x)dx = \frac{C_m\sqrt{C_\mu} - C_\mu\sqrt{C_m} - (\lambda_2\sqrt{C_\mu} - \lambda_1\sqrt{C_m})E[D]}{\lambda_1(\sqrt{C_m} + \sqrt{C_\mu})} \qquad (9)$$

and in a VAS-based system, the optimal velocity threshold can be determined by:

$$\int_{V_{min}}^{V_0^*} f_V(x)dx = \frac{(\lambda_1 + \lambda_2)E[D]\sqrt{C_\mu} - C_m\sqrt{C_\mu} + C_\mu\sqrt{C_m}}{(\sqrt{C_m} + \sqrt{C_\mu})\lambda_1 E[D]} \qquad (10)$$

In equations 9 and 10 the variables are defined as set forth above, while $D_0^*$ is the optimal data threshold constrained to be within the interval $[D_{min}, D_{max}]$ and $V_0^*$ is the optimal velocity threshold constrained to be within the interval $[V_{min}, V_{max}]$. E[D] is, once again, the average data size of all users in the user population in the macro-cell layer and the micro-cell layer combined. Accordingly, the optimal data threshold $D_0^*$ and/or the optimal velocity threshold $V_0^*$ in a DAS and VAS system, respectively, can be calculated to permit optimal assignment of users to macro- and micro-cell layers in a network. Thus, balance is achieved between those macro- and micro-cell layers.

The above discussion considered one embodiment in accordance with the principles of the present invention whereby the goal of an assignment system, either VAS or DAS-based, was to minimize the average number of users in the network. As discussed previously, one skilled in the art will recognize that many alternate goals may be used in the effort to achieve optimal performance of a chosen assignment system. One such alternate goal, in another embodiment in accordance with the principles of the present invention, is to minimize the expected system load as seen by a new, incoming user to be assigned to one of the macro- or micro-cell layers in a network. The expected system load is defined herein as the average number of bits in the network awaiting transmission when a new call from the user arrives in at the network. Such an expected system load is defined as:

$$E[L_{sys}] = \Pr(m)\bar{D}_m E[N_m] + \Pr(\mu)\bar{D}_\mu E[N_\mu] \tag{11}$$

where $E[L_{sys}]$ is the expected system load; $\Pr(m)$ and $\Pr(\mu)$ are the probabilities that a user is assigned to the macro and the micro-cell layers, respectively; $E[N_m]$ and $E[N_\mu]$ are the average number of users in the macro- and the micro cells, respectively; and $\bar{D}_\mu$ and $\bar{D}_m$ are the average amounts of data to be transmitted by users assigned to the macro- and the micro-cells, respectively.

In such a case, the goal of the balancing metric can once again be calculated by equation 2A with:

$$X_m = \frac{\lambda_m \bar{D}_m}{C_m - \lambda_m \bar{D}_m}. \tag{12}$$

and

$$X_\mu = \frac{\lambda_\mu \bar{D}_\mu}{C_\mu - \lambda_\mu \bar{D}_\mu}. \tag{13}$$

However, one skilled in the art will recognize that $\dfrac{\lambda_m \bar{D}_m}{C_m - \lambda_m \bar{D}_m}$ is merely equal to $E[N_m]$, the average number of users in the macro-cell layer. Similarly, $\dfrac{\lambda_\mu \bar{D}_\mu}{C_\mu - \lambda_\mu \bar{D}_\mu}$ is equal to $E[N_\mu]$, the average number of users in the micro-cell layer. Therefore, the balancing metric for the goal of minimizing the expected system load can be expressed with $X_m = E[N_m]$ and $X_\mu = E[N_\mu]$. This balancing equation has the benefit that the average number of users over a given amount of time in both the macro- and micro-cell layers is readily available and no *a priori* knowledge of cell capacities is required.

It follows that, in accordance with the principles of the present invention, when the goal of an assignment system is to minimize the expected system load, the optimum data size threshold $D_0^*$ in a DAS-based system can be determined by:

$$\int_{D_{min}}^{D_0^*} x f_D(x)dx = \frac{(\lambda_1 C_m - \lambda_2 C_\mu)E[D]}{\lambda_1(C_m + C_\mu)} \tag{14}$$

such that balance is achieved according to the above balancing equation, $E[N_m] = E[N_\mu]$. In a VAS-based system, balance in this equation can be achieved by calculating the optimal velocity threshold $V_0^*$ as:

$$\int_{V_{min}}^{V_0^*} f_V(x)dx = \frac{(\lambda_1 + \lambda_2)C_\mu}{\lambda_1(C_m + C_\mu)}. \tag{15}$$

The variables in equations 14 and 15 are defined as set forth herein above. Once again, in equation 14, $D_0{}^*$ is constrained to be within the interval [$D_{min}$, $D_{max}$] and, in equation 15, $V_0{}^*$ is constrained to be within the interval [$V_{min}$, $V_{max}$]

The discussion above has thus far centered on determining an optimum data size threshold and an optimum velocity threshold to assign users to a network layer in a DAS-based system or a VAS based system, respectively. Two different illustrative system goals (out of many possible such goals) were considered: minimum average number of users in the system and minimum expected system load. While the optimum data size and velocity thresholds of equations 9, 10, 14 and 15 are useful, they each require a certain amount of *a priori* information relating to the system in order to calculate the optimum values. Specifically, these equations each require knowledge of the macro- and micro-cell capacities, the profile distribution of velocity and data size across the user population, and the call arrival rates. Unfortunately, in practical systems, such knowledge may not be available and, thus, would have to be estimated. Estimations would be difficult as the information to be estimated would frequently be time-varying and, therefore, the only practical method of performing such calculations would be to accomplish those calculations in an off-line manner (i.e., not in sufficient time to perform an update to the optimal threshold and assign a new user to a network layer).

The present inventors have realized that it is a desirable goal of an assignment system to not make such estimations and to assign users in an on-line manner to a network layer in real-time or in a near-real-time fashion. Therefore, in accordance with the principles of the present invention, such equations that do not require estimation can be obtained by holding the calculated optimum thresholds constant over a given period of time. This is possible because the thresholds are not likely to vary significantly over a short period of time (e.g., less than a minute). The calculated optimum thresholds are only updated at the beginning of each update interval. Therefore, the goal of the balancing metric as expressed in equation 2A can be expressed as:

$$X_m[k] = X_\mu[k] \tag{16}$$

where $X_m[k]$ and $X_\mu[k]$ represent the values of the balancing metric at the macro- and micro-cell layers at the beginning of the k-th update interval. At the beginning of that interval, the optimal threshold (either data size or velocity) is updated in proportion to any imbalance that exists between the values of $X_m[k]$ and $X_\mu[k]$.

In accordance with such an updating method, in a VAS-based system the optimal velocity threshold is updated according to:

$$V_0[k] = \min\left\{\max\left\{V_{min}, V_0[k-1] + \frac{\beta_v}{k^{\gamma_v}}[X_m[k] - X_\mu[k]]\right\}, V_{max}\right\} \tag{17}$$

where $V_0[k]$ is the optimal velocity threshold at the k-th update interval; $\beta_v$ is an update magnitude parameter that can be tuned in order to regulate the speed of convergence of the algorithm; $\gamma_v$ is a time discounting factor which results in the algorithm making smaller adjustments as the number of updates performed is increased (and hence as the velocity threshold becomes closer to the intended value); and $V_0[k-1]$ is the velocity threshold used at the k-1 update interval. The term $\frac{\beta_v}{k^{\gamma_v}}$ guarantees convergence of the update algorithm and avoids limit cycles (i.e., bouncing back and forth repeatedly between two values of the threshold, neither one of which is the optimal threshold) by making smaller incremental changes to the velocity threshold. One skilled in the art will recognize that variables such as $\beta_v$ and $\gamma_v$ may take many forms and, accordingly, one skilled in the art will be able to devise different values and/or expressions that will be suitable for use in those variables.

If the calculation for both the macro- and micro-cell layers leads to the result that $X_m[k] > X_\mu[k]$, there are too many users assigned to the macro-cell layer, resulting in an imbalance in favor of the micro-cell layer. Hence, the optimal velocity threshold should be adjusted in such a way as to increase the number of users in the micro-cell (i.e., $V_0$ should be increased). Similarly, if $X_m[k] < X_\mu[k]$, $V_0$ should be decreased. One skilled in the art will recognize that the updated value of $V_0[k]$ obtained via equation 17 is constrained to be in the interval [$V_{min}$, $V_{max}$].

While the optimal velocity threshold of equation 17 is useful, a potential drawback to this equation is that it may be very sensitive to the measurements taken in the last update interval k-1. Thus, in accordance with the principles of the present invention, a "smoother" update rule, that considers the exponentially weighted moving average of the difference in the balancing metric, may be used. Such a rule is considered smoother as it is not as sensitive to the measurements taken in the previous update interval. The exponentially weighted moving average of the difference in the balancing metric may be expressed as:

$$\Delta[k]=(1 - \alpha_v)[X_m[k]-X_\mu[k]]+\alpha_v \cdot \Delta[k - 1] \tag{18}$$

where $\Delta[k]$ is the weighted moving average, $X_m[k]$ is the balancing metric for the macro-cell layer at the k-th update interval, $X_\mu[k]$ is the balancing metric for the micro-cell layer at the k-th update interval, $\alpha_v$ is a smoothing factor where $\alpha_v \in [0,1]$, and $\Delta[k-1]$ is the previously calculated weighted moving average at the k-1 update interval. The term $\alpha_v$ can be chosen, or tuned, to give more or less weight to the past measurements.

The resulting optimal velocity threshold update taking into account the weighted average of equation 18, and thus being less sensitive to instantaneous changes in the balancing metric from previous updates, can be expressed as:

$$V_0[k] = \min\left\{\max\left\{V_{\min}, V_0[k-1]+\frac{\beta_v}{k^{\gamma_v}}\Delta[k]\right\}, V_{\max}\right\} \tag{19}$$

When the algorithm converges (i.e., when consecutive values of the velocity threshold are substantially equal), $\Delta[k] = 0$, leading to $X_m[k]=X_\mu[k]$, as desired. Changes in the arrival rate of calls and/or the distribution of users to the macro- and micro-cells are indirectly detected by an imbalance of the balancing metric which leads to larger values of $\Delta[k]$ which, in turn, triggers an update of the velocity threshold. One skilled in the art will recognize in light of the foregoing that it may be desirable to reset the value of k to 1 periodically to permit the weighted average to respond relatively quickly to changes in the call arrival rate and/or the distribution of users. For example, the value of k may be changed after a given number of update calculations (e.g., illustratively, 20 updates). Alternatively, the value of k may be reset whenever the difference in the balancing metric between the macro- and micro-layers is small.

While the foregoing discussion of equations 16-19 was applied solely to a VAS-based system, the principles of that discussion can be equally applied to a DAS-based system with equally advantageous results. In such a system, the data threshold will closely mirror that of equation 19. Specifically, the data threshold at the k-th update interval can be expressed as:

$$D_0[k] = \min\left\{\max\left\{D_{\min}, D_0[k-1]-\frac{\beta_d}{k^{\gamma_d}}\Delta[k]\right\}, D_{\max}\right\} \tag{20}$$

where

$$\Delta[k]=(1-\alpha_d)[X_m[k]-X_\mu[k]]+\alpha_d \cdot \Delta[k-1] \tag{21}$$

and where $\Delta[0]=0$ and, once again, $\alpha_d \in [0,1]$. It will be noted that the only difference between equations 19 and 20, other than one is DAS-related and the other is VAS-related, is the change in sign between the terms in the equation. This difference is a result of the fact that, in order to increase the number of users in a micro cell layer, the data threshold Do should be decreased, whereas the velocity threshold should be increased to achieve the same goal. All comments in the above discussion relating to equations 16-19 apply equally to a discussion of equations 20 and 21. One skilled in the art will recognize that the tunable parameters $\beta_d$ and $\gamma_d$ may be chosen similarly to those chosen for the VAS-based system, as discussed above, or alternatively those parameters may be chosen differently to optimize the performance of the DAS-based system.

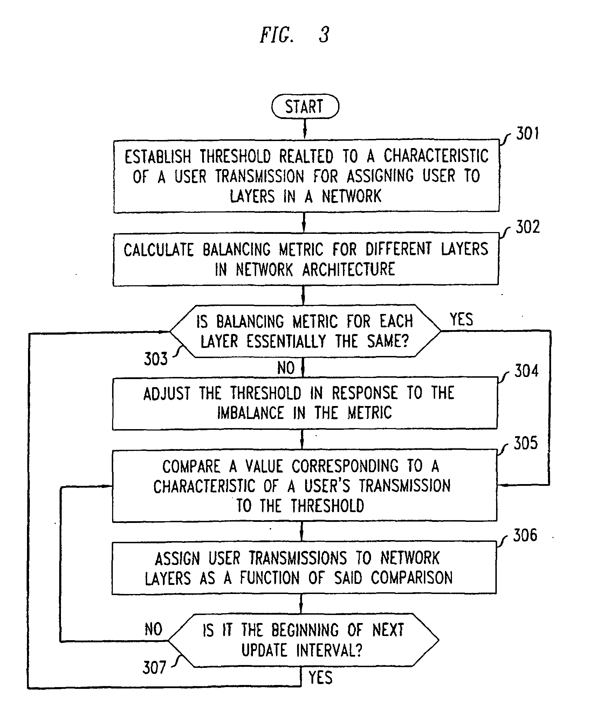

FIG. 3 shows an illustrative flow chart that represents the steps of one embodiment of a method in accordance with the assignment strategy of the present invention. One skilled in the art will recognize that this method may be carried out, for example, in a computer processor processing software instructions. Such a computer processor may reside in any network component, such as in optimization unit 204 in FIG. 2 or, alternatively, as a part of any computer hardware component within or external to the network shown in FIG. 2.

Returning to FIG. 3, at step 301, a threshold is established for at least one user transmission characteristic of an incoming call. This threshold is used to assign users to layers in a network. As discussed above, this characteristic may be, illustratively, a user's data size or velocity. Next, at step 302, a balancing metric is calculated for each layer in the network by, illustratively, the optimization unit (OU) 204 in FIG. 2. At step 303, a determination is made, once again illustratively in OU 204, as to whether the balancing metric for each layer is essentially the same. If the metric for each layer is essentially the same, it indicates that the layers are optimally balanced and, at step 305, a value corresponding to a characteristic of a user's transmission is compared to the threshold and that user is assigned to a network layer as a function of that comparison. The comparison in step 305 is, for example, made by the assignment engine (AE) 208 within the assignment unit (AU) 202 of FIG. 2.

If, at step 303, the determination is made that the balancing metric for each layer is not essentially the same, at step 304 the threshold is adjusted illustratively by the OU 204 (e.g., proportionally to the imbalance between the layers) in order to achieve an optimal balance between the layers. Once the threshold is adjusted at step 304, at step 305 the characteristic of an incoming call is compared once again at the AE 208 in the AU 201 to the adjusted threshold. After the characteristic of the call is compared to the threshold, whether that threshold was established in step 301 or adjusted in step 304, at step 306 the user transmission is assigned to a layer in the network in response to the comparison at step 305 and as discussed above.

At step 307, a determination is made as to whether it is the beginning of the next update interval. If not, the system will return to the comparison at step 305 for each incoming user, as discussed above, and will continue to assign users at step 306 to a layer in the network until, at step 307, it is determined that it is the beginning of the next update interval. When, at step 307, it is determined that it is the beginning of the next update interval, the system returns to step 303 and a determination is made as to whether the balancing metric for each layer in the network is essentially the same and the process as outlined above is followed for either adjusting the threshold (if there is an imbalance) or continuing to assign users based on the previously established threshold (if there is no imbalance).

The foregoing merely illustrates the principles of the invention. It will thus be appreciated that those skilled in the art will be able to devise various arrangements which, although not explicitly described or shown herein, embody the principles of the invention. Furthermore, all examples and conditional language recited herein are intended expressly to be only for pedagogical purposes to aid the reader in understanding the principles of the invention and are to be construed as being without limitation to such specifically recited examples and conditions. Moreover, all statements herein reciting aspects and embodiments of the invention, as well as specific examples thereof, are intended to encompass functional equivalents thereof.

**Claims**

1. A method for calculating a transmission characteristic threshold for use in assigning a user to one layer in a plurality of layers in a wireless communications network, said method comprising the step of
   calculating (302) a first balancing metric based on an operating characteristic of said first layer; the method being **characterized in that** it further comprises the steps of
   calculating (302) a second balancing metric based on an operating characteristic of said second layer; and
   adjusting (304) said transmission characteristic threshold in response to the value of said first balancing metric relative to said second balancing metric.

2. The method of claim 1 further **CHARACTERIZED BY** the step of assigning (306) said user to a layer in response to the value of a first user transmission characteristic of a transmission from said user relative to said adjusted transmission characteristic threshold.

3. The method of claim 1 **CHARACTERIZED IN THAT** said transmission characteristic threshold is a threshold corresponding to the size of the data to be transmitted to or from said user.

4. The method of claim 3 **CHARACTERIZED IN THAT** said threshold is adjusted according to the equation:

$$D_0[k] = \min\left\{\max\left\{D_{\min}, D_0[k-1] - \frac{\beta_d}{k^{\gamma_d}}\Delta[k]\right\}, D_{\max}\right\}$$

where $D_0[k]$ is an optimal data size threshold at the k-th update interval of said threshold; $\beta_d$ is an update magnitude

parameter; $\gamma_d$ is a time discounting factor; D$_0$[k-1] is a data size threshold used at the k-1 update interval; $\Delta[k]$ is a weighted moving average of previous values of a difference in said balancing metric between the macro-cell layer and the micro-cell layer; Dmin is the minimum data amount to be transmitted by any user in the user population; and $D_{max}$ is a maximum possible data size corresponding to said user.

5. The method of claim 1 **CHARACTERIZED IN THAT** said transmission characteristic threshold is a threshold corresponding to the velocity of said user.

6. Apparatus for calculating a transmission characteristic threshold for assigning a user to one layer in a plurality of layers in a wireless communications network, said apparatus comprising

   means for calculating a first balancing metric based on an operating characteristic of said first layer; the apparatus being **characterized in that** it further comprises
   means for calculating a second balancing metric based on an operating characteristic of said second layer; and
   means for adjusting said transmission characteristic threshold in response to the value of said first balancing metric relative to said second balancing metric.

7. The apparatus of claim 6 further **CHARACTERIZED BY** means for assigning said user to a layer in response to the value of a first user transmission characteristic of a transmission from said user relative to said adjusted transmission characteristic threshold.

8. The apparatus of claim 6 **CHARACTERIZED IN THAT** said transmission characteristic threshold is a threshold corresponding to the size of the data to be transmitted to or from said user.

9. The apparatus of claim 14 **CHARACTERIZED IN THAT** said threshold is adjusted according to the equation:

$$D_0[k] = \min\left\{\max\left\{D_{min}, D_0[k-1] - \frac{\beta_d}{k^{\gamma_d}}\Delta[k]\right\}, D_{max}\right\}$$

   where D$_0$[k] is an optimal data size threshold at the k-th update interval of said threshold; $\beta_d$ is an update magnitude parameter; $\gamma_d$ is a time discounting factor; D$_0$[k-1] is a data size threshold used at the k-1 update interval; $\Delta[k]$ is a weighted moving average of previous values of a difference in said balancing metric between the macro-cell layer and the micro-cell layer; Dmin is the minimum data amount to be transmitted by any user in the user population; and $D_{max}$ is a maximum possible data size corresponding to said user.

10. The apparatus of claim 6 **CHARACTERIZED IN THAT** said transmission characteristic threshold is a threshold corresponding to the velocity of said user.

**Patentansprüche**

1. Verfahren zur Berechnung einer bei der Zuweisung eines Benutzers zu einer Schicht in einer Vielzahl von Schichten in einem drahtlosen Kommunikationsnetz zu verwendenden Übertragungskenngrößenschwelle, mit den folgenden Schritten:

   Berechnen (302) einer ersten Ausgleichsmetrik auf der Basis einer Betriebskenngröße der ersten Schicht; wobei das Verfahren ferner durch die folgenden Schritte **gekennzeichnet** ist:

   Berechnen (302) einer zweiten Ausgleichsmetrik auf der Basis einer Betriebskenngröße der zweiten Schicht; und

   Einstellen der Übertragungskenngrößenschwelle als Reaktion auf den Wert der ersten Ausgleichsmetrik relativ zu der zweiten Ausgleichsmetrik.

2. Verfahren nach Anspruch 1, ferner **gekennzeichnet durch** den Schritt des Zuweisens (306) des Benutzers zu einer Schicht als Reaktion auf den Wert einer ersten Benutzerübertragungskenngröße einer Übertragung von dem Benutzer relativ zu der eingestellten Übertragungskenngrößenschwelle.

3.  Verfahren nach Anspruch 1, **dadurch gekennzeichnet, daß** die Übertragungskenngrößenschwelle eine Schwelle ist, die der Größe der zu oder von dem Benutzer zu übertragenden Daten entspricht.

4.  Verfahren nach Anspruch 1, **dadurch gekennzeichnet, daß** die Schwelle gemäß der folgenden Gleichung eingestellt wird:

$$D_0[k] = \min\left\{ \max\left\{ D_{\min}, D_0[k-1] - \frac{\beta_d}{k^{\gamma_d}} \Delta[k] \right\}, D_{\max} \right\}$$

wobei $D_0[k]$ eine optimale Datengrößenschwelle im k-ten Aktualisierungsintervall der Schwelle; $\beta_d$ ein Aktualisierungsbetragsparameter; $\gamma_d$ ein Timing-Rabattfaktor; $D_0[k-1]$ eine im Aktualisierungsintervall k-1 verwendete Datengrößenschwelle; $\Delta[k]$ ein gewichteter gleitender Mittelwert vorheriger Werte einer Differenz der Ausgleichsmetrik zwischen der Makrozellenschicht und der Mikrozellenschicht; Dmin die minimale durch jeden Benutzer in der Benutzerpopulation zu übertragende Datenmenge; und Dmax die maximal mögliche dem Benutzer entsprechende Datengröße ist.

5.  Verfahren nach Anspruch 1, **dadurch gekennzeichnet, daß** die Übertragungskenngrößenschwelle eine der Geschwindigkeit des Benutzers entsprechende Schwelle ist.

6.  Vorrichtung zur Berechnung einer Übertragungskenngrößenschwelle für die Zuweisung eines Benutzers zu einer Schicht in einer Vielzahl von Schichten in einem drahtlosen Kommunikationsnetz, wobei die Vorrichtung weiterhin folgendes umfaßt:

    Mittel zum Berechnen einer ersten Ausgleichsmetrik auf der Basis einer Betriebskenngröße der ersten Schicht; wobei die Vorrichtung ferner durch folgendes **gekennzeichnet** ist:

    Mittel zum Berechnen einer zweiten Ausgleichsmetrik auf der Basis einer Betriebskenngröße der zweiten Schicht; und

    Mittel zum Einstellen der Übertragungskenngrößenschwelle als Reaktion auf den Wert der ersten Ausgleichsmetrik relativ zu der zweiten Ausgleichsmetrik.

7.  Vorrichtung nach Anspruch 6, ferner **gekennzeichnet durch** Mittel zum Zuweisen des Benutzers zu einer Schicht als Reaktion auf den Wert einer ersten Benutzerübertragungskenngröße einer Übertragung von dem Benutzer relativ zu der eingestellten Übertragungskenngrößenschwelle.

8.  Vorrichtung nach Anspruch 6, **dadurch gekennzeichnet, daß** die Übertragungskenngrößenschwelle eine Schwelle ist, die der Größe der zu oder von dem Benutzer zu übertragenden Daten entspricht.

9.  Vorrichtung nach Anspruch 14, **dadurch gekennzeichnet, daß** die Übertragungskenngrößenschwelle gemäß der folgenden Gleichung eingestellt wird:

$$D_0[k] = \min\left\{ \max\left\{ D_{\min}, D_0[k-1] - \frac{\beta_d}{k^{\gamma_d}} \Delta[k] \right\}, D_{\max} \right\}$$

wobei $D_0[k]$ eine optimale Datengrößenschwelle im k-ten Aktualisierungsintervall der Schwelle; $\beta_d$ ein Aktualisierungsbetragsparameter; $\gamma_d$ ein Timing-Rabattfaktor; $D_0[k-1]$ eine im Aktualisierungsintervall k-1 verwendete Datengrößenschwelle; $\Delta[k]$ ein gewichteter gleitender Mittelwert vorheriger Werte einer Differenz der Ausgleichsmetrik zwischen der Makrozellenschicht und der Mikrozellenschicht; Dmin die minimale durch jeden Benutzer in der Benutzerpopulation zu übertragende Datenmenge; und Dmax die maximal mögliche dem Benutzer entsprechende Datengröße ist.

10. Vorrichtung nach Anspruch 6, **dadurch gekennzeichnet, daß** die Übertragungskenngrößenschwelle eine der Geschwindigkeit des Benutzers entsprechende Schwelle ist.

**Revendications**

1. Procédé de calcul d'un seuil de caractéristique de transmission destiné à être utilisé dans l'assignation d'un utilisateur à une couche dans une pluralité de couches dans un réseau de communications sans fil, ledit procédé comprenant l'étape de :

   calcul (302) d'une première métrique d'équilibrage basé sur une caractéristique opérationnelle de ladite première couche ; le procédé étant **caractérisé en ce qu'**il comprend en outre les étapes de :

   calcul (302) d'une deuxième métrique d'équilibrage basé sur une caractéristique opérationnelle de ladite deuxième couche ; et
   ajustement (304) dudit seuil de caractéristique de transmission en réponse à la valeur de ladite première métrique d'équilibrage par rapport à ladite deuxième métrique d'équilibrage.

2. Procédé selon la revendication 1, **CARACTERISE en outre par** l'étape d'assignation (306) dudit utilisateur à une couche en réponse à la valeur d'une première caractéristique de transmission d'utilisateur d'une transmission depuis ledit utilisateur par rapport audit seuil de caractéristique de transmission ajusté.

3. Procédé selon la revendication 1, **CARACTERISE EN CE QUE** ledit seuil de caractéristique de transmission est un seuil correspondant à la taille des données devant être transmises vers ou depuis ledit utilisateur.

4. Procédé selon la revendication 3, **CARACTERISE EN CE QUE** ledit seuil est ajusté conformément à l'équation :

$$D_0[k] = \min\left\{ \max\left\{ D_{\min}, D_0[k-1] - \frac{\beta_d}{k^{\gamma d}} \Delta[k] \right\}, D_{\max} \right\}$$

où $D_0[k]$ est un seuil de taille de données optimale au $k^e$ intervalle de mise à jour dudit seuil ; $\beta_d$ est un paramètre de grandeur de mise à jour ; $\gamma_d$ est un facteur de décompte de temps ; $D_0[k-1]$ est un seuil de taille de données utilisé au $k-1^e$ intervalle de mise à jour ; $\Delta[k]$ est une moyenne mobile pondérée de valeurs antérieures d'une différence dans ladite métrique d'équilibrage entre la couche macrocellulaire et la couche microcellulaire ; $D_{\min}$ est la quantité de données minimum qui sera transmise par n'importe quel utilisateur dans la population ; et $D_{\max}$ est une taille de données possible maximum correspondant audit utilisateur.

5. Procédé selon la revendication 1, **CARACTERISE EN CE QUE** ledit seuil de caractéristique de transmission est un seuil correspondant à la vitesse dudit utilisateur.

6. Appareil pour calculer un seuil de caractéristique de transmission pour assigner un utilisateur à une couche dans une pluralité de couches dans un réseau de communications sans fil, ledit appareil comprenant :

   un moyen pour calculer une première métrique d'équilibrage basé sur une caractéristique opérationnelle de ladite première couche ; ledit appareil étant **caractérisé en ce qu'**il comprend en outre :

   un moyen pour calculer une deuxième métrique d'équilibrage basé sur une caractéristique opérationnelle de ladite deuxième couche ; et
   un moyen pour ajuster ledit seuil de caractéristique de transmission en réponse à la valeur de ladite première métrique d'équilibrage par rapport à ladite deuxième métrique d'équilibrage.

7. Appareil selon la revendication 6, **CARACTERISE en outre par** un moyen pour assigner ledit utilisateur à une couche en réponse à la valeur d'une première caractéristique de transmission d'utilisateur d'une transmission depuis ledit utilisateur par rapport audit seuil de caractéristique de transmission ajusté.

8. Appareil selon la revendication 6, **CARACTERISE EN CE QUE** ledit seuil de caractéristique de transmission est un seuil correspondant à la taille des données devant être transmises vers ou depuis ledit utilisateur.

9. Appareil selon la revendication 14, **CARACTERISE EN CE QUE** ledit seuil est ajusté conformément à l'équation :

$$D_0[k] = \min\left\{\max\left\{D_{\min}, D_0[k-1] - \frac{\beta_d}{k^{\gamma d}}\Delta[k]\right\}, D_{\max}\right\}$$

où $D_0[k]$ est un seuil de taille de données optimale au $k^e$ intervalle de mise à jour dudit seuil ; $\beta_d$ est un paramètre de grandeur de mise à jour ; $\gamma_d$ est un facteur de décompte de temps ; $D_0[k-1]$ est un seuil de taille de données utilisé au $k-1^e$ intervalle de mise à jour ; $\Delta[k]$ est une moyenne mobile pondérée de valeurs antérieures d'une différence dans ladite métrique d'équilibrage entre la couche macrocellulaire et la couche microcellulaire ; $D_{\min}$ est la quantité de données minimum qui sera transmise par n'importe quel utilisateur dans la population ; et $D_{\max}$ est une taille de données possible maximum correspondant audit utilisateur.

10. Appareil selon la revendication 6, **CARACTERISE EN CE QUE** ledit seuil de caractéristique de transmission est un seuil correspondant à la vitesse dudit utilisateur.

FIC. 1

*FIG. 2*

ASSIGNMENT UNIT (AU) — BA

TO/FROM INTERNET — CALL REQUEST / MACRO/MICRO DECISION

NETWORK INTERFACE UNIT — 206

CALL REQUEST / MACRO/MICRO DECISION

ASSIGNMENT ENGINE (AE) — 208

130

202

OPTIMIZATION UNIT (OU) — BB

OPTIMIZATION UNIT CONTROLLER — 222

FEASIBLE RATES UNIT — 224

TO/FROM INTERNET

204

EP 1 499 152 B1

## FIG. 3

START

ESTABLISH THRESHOLD REALTED TO A CHARACTERISTIC OF A USER TRANSMISSION FOR ASSIGNING USER TO LAYERS IN A NETWORK — 301

CALCULATE BALANCING METRIC FOR DIFFERENT LAYERS IN NETWORK ARCHITECTURE — 302

IS BALANCING METRIC FOR EACH LAYER ESSENTIALLY THE SAME? — 303 — YES

NO

ADJUST THE THRESHOLD IN RESPONSE TO THE IMBALANCE IN THE METRIC — 304

COMPARE A VALUE CORRESPONDING TO A CHARACTERISTIC OF A USER'S TRANSMISSION TO THE THRESHOLD — 305

ASSIGN USER TRANSMISSIONS TO NETWORK LAYERS AS A FUNCTION OF SAID COMPARISON — 306

NO — IS IT THE BEGINNING OF NEXT UPDATE INTERVAL? — 307

YES

17